# EUROPEAN PATENT APPLICATION

(11) **EP 4 679 062 A1**
(43) Date of publication of application: **14.01.2026**
(21) Application number: 25189435.8
(22) Date of filing: 14.07.2025
(51) Int. Cl.: G01N 21/31, G01J 3/427, G01N 21/39, G01S 7/48, G01S 17/95, G01N 21/17, G01N 21/47

(54) **MULTI-WAVE DIFFERENTIAL ABSORPTION LIDAR**

(30) Priority: 12.07.2024 US 202418771604
(71) Applicant: RTX Corporation, Farmington, CT 06032 (US)
(72) Inventor: LINCOLN, David L., Cromwell, 06416 (US); CASTILLO-GARZA, Jose-Rodrigo, West Hartford, 06117 (US); SPAETH, Andrew D., Holden, 01520 (US)
(74) Representative: Dehns

(57) **Abstract**

A system (100) includes illumination and light collection optics (108) configured to illuminate a targeted region of interest and receive backscattered light from the targeted region of interest. The system (100) includes a differential absorption light detection and ranging ("DIAL") sub-system (104) with a first illuminator (124) configured to emit light, through the illumination and light collection optics (108) at a first wavelength corresponding to a first absorption peak of in an absorption curve of a first analyte of interest, and a second illuminator (126) configured to emit light, through the illumination and light collection optics (108) at a second wavelength corresponding to a first absorption trough in the absorption curve of the first analyte of interest, wherein the second wavelength is adjacent to the first wavelength. The system (100) includes a controller (154) configured to determine a concentration of the first analyte of interest in the targeted region of interest.

## Description

### TECHNICAL FIELD

This disclosure relates generally to the measurement of atmospheric gases and particulate matter, in particular atmospheric gas, such as water vapor, and particulates of concern for aviation, including without limitation water and by-products of fuel combustion in jet engines.

### BACKGROUND

Recent developments in atmospheric science and aviation have motivated a heightened demand for granular atmospheric gas and particulate data, such as across measurement intervals less than 1 kilometer. For example, given evidence showing links between atmospheric warning, aircraft contrails, and water vapor content as a leading predictor of contrail formation, an aircraft with granular data as to the water vapor content may, with only modest directional correction (such as climbing or descending a few hundred meters) avoid creating contrails. Similarly, granular data on atmospheric gas and particulates (such as calcium-magnesium-alumina-silicate "CMAS") that can glaze and degrade the combustor stages of jet engines may enable aircraft to avoid pockets of concentrated analytes through minor navigational corrections, thereby extending engine life. Further, advanced data analysis tools, such as large artificial intelligence/ machine learning models, may be trained to predict the incidence and persistence of contrails, as well as model the effects on machinery and operating environments of emissions characteristics of cleaner jet fuels, such as nitrogen oxides and sulfur oxides. As such, refining the spatial granularity and range of analytes of analyte detection devices remains a source of technical challenges and opportunities for improvement.

### SUMMARY

This disclosure relates to systems and methods for granular measurement of analytes, including atmospheric gas and particulates using multi-wave differential light detection and ranging (LIDAR).

In a first embodiment of the present invention, a system includes illumination and light collection optics configured to illuminate a targeted region of interest and receive backscattered light from the targeted region of interest. The system also includes a differential absorption light detection and ranging ("DIAL") sub-system. The DIAL sub-system includes a first illuminator configured to emit light through the illumination and light collection optics at a first wavelength corresponding to a first absorption peak in an absorption curve of a first analyte of interest. The DIAL sub-system also includes a second illuminator configured to emit light through the illumination and light collection optics at a second wavelength corresponding to a first absorption trough in the absorption curve of the first analyte of interest, where the second wavelength is adjacent to the first wavelength. The DIAL sub-system further includes a first photodetector configured to measure an intensity of backscattered light at the first wavelength and an intensity of backscattered light at the second wavelength. The system further includes a controller configured to determine, based on a differential between the intensity of the backscattered light at the first wavelength and the intensity of the backscattered light at the second wavelength, a concentration of the first analyte of interest in the targeted region of interest.

Any single one or any combination of the following features may be used with the first embodiment. The system may be integrated with an aircraft, and the illumination and light collection optics may be configured the illumination and light collection optics are configured to periodically change one or more of a range from the aircraft of the targeted region of interest or an angle relative to a direction of flight of the aircraft of the targeted region of interest to scan for the first analyte of interest.

The DIAL sub-system may include a third illuminator configured to emit light through the illumination and light collection optics at a third wavelength corresponding to a wavelength between the first and second wavelengths, the third wavelength may be in the absorption curve of the first analyte of interest between the first absorption peak and the first absorption trough, and the controller may be configured to determine, based on a differential between an intensity of the backscattered light at the third wavelength relative to one or more of the intensity of the backscattered light at the first wavelength or the backscattered light at the second wavelength, the concentration of the first analyte in the targeted region of interest. The DIAL sub-system may include (i) a third illuminator configured to emit light through the illumination and light collection optics at a third wavelength corresponding to a second absorption peak in an absorption curve of a second analyte of interest and (ii) a fourth illuminator configured to emit light through the illumination and light collection optics at a fourth wavelength corresponding to a second absorption trough in the absorption curve of the second analyte of interest (the fourth wavelength may be adjacent to the third wavelength), and the controller may be configured to determine, based on a differential between an intensity of backscattered light at the third wavelength and an intensity of backscattered light of the fourth wavelength, a concentration of the second analyte of interest in the targeted region of interest. The system may include a polarization measurement sub-system that includes a fifth illuminator configured to emit polarized light through the illumination and light collection optics at a fifth wavelength distinct from the first, second, third, and fourth wavelengths, a polarizing filter, and a second photodetector configured to measure an intensity of backscattered light passing through the polarizing filter at the fifth wavelength, and the controller may be configured to determine, based on the intensity of the backscattered light passing through the polarizing filter at the fifth wavelength, the concentration of the second analyte of interest in the targeted region of interest. The first analyte of interest may include at least one of: nitrous oxide, sulfur oxide, calcium-magnesium-alumina-silicate (CMAS), smoke, or ash. The second analyte of interest may include water vapor. The targeted region of interest may be provided at a distance between 1 and 1,000 meters from the aircraft. The targeted region of interest may have a depth of 1,000 meters or less. The system may include one or more machine learning/artificial intelligence models trained at least in part on the determined concentration of the first analyte of interest in the targeted region of interest.

In a second embodiment of the present invention, a method includes illuminating a targeted region of interest by (i) emitting, using a first illuminator, light through illumination and light collection optics at a first wavelength corresponding to a first absorption peak in an absorption curve of a first analyte of interest and (ii) emitting, using a second illuminator, light through the illumination and light collection optics at a second wavelength corresponding to a first absorption trough in the absorption curve of the first analyte of interest, where the second wavelength is adjacent to the first wavelength. The method also includes receiving backscattered light from the targeted region of interest and measuring, using a first photodetector, an intensity of backscattered light at the first wavelength and an intensity of backscattered light at the second wavelength. The method further includes determining, based on a differential between the intensity of the backscattered light at the first wavelength and the intensity of the backscattered light at the second wavelength, a concentration of the first analyte of interest in the targeted region of interest.

Any single one or any combination of the following features may be used with the second embodiment. The method may be performed in association with an aircraft, and the method may include scanning concentrations of the first analyte of interest by periodically the illumination and light collection optics are configured to periodically change one or more of a range from the aircraft of the targeted region of interest or an angle relative to a direction of flight of the aircraft of the targeted region of interest to scan for the first analyte of interest. Illuminating the targeted region of interest may include emitting, using a third illuminator, light through the illumination and light collection optics at a third wavelength corresponding to a wavelength between the first and second wavelengths (the third wavelength may be in the absorption curve of the first analyte of interest between the first absorption peak and the first absorption trough), and the method may include receiving, at the first photodetector via the illumination and light collection optics, backscattered light at the third wavelength and determining, based on a differential between an intensity of the backscattered light at the third wavelength relative to one or more of the intensity of the backscattered light at the first wavelength or the backscattered light at the second wavelength, the concentration of the first analyte in the targeted region of interest. Illuminating the targeted region of interest may include (i) emitting, using a third illuminator, light through the illumination and light collection optics at a third wavelength corresponding to a second absorption peak in an absorption curve of a second analyte of interest and (ii) emitting, using a fourth illuminator, light through the illumination and light collection optics at a fourth wavelength corresponding to a second absorption trough in the absorption curve of the second analyte of interest (the fourth wavelength may be adjacent to the third wavelength), and the method may include receiving, at the first photodetector via the illumination and light collection optics, backscattered light at the third wavelength and backscattered light at the fourth wavelength and determining, based on a differential between an intensity of the backscattered light at the third wavelength and an intensity of the backscattered light of the fourth wavelength, a concentration of the second analyte of interest in the targeted region of interest. Illuminating the targeted region of interest may include emitting, using a fifth illuminator, polarized light through the illumination and light collection optics at a fifth wavelength distinct from the first, second, third, and fourth wavelengths, and the method may include receiving, at a second photodetector through a polarizing filter, backscattered light at the fifth wavelength; using the second photodetector, measuring an intensity of the backscattered light at the fifth wavelength; and determining, based on the intensity of the backscattered light passing through the polarizing filter at the fifth wavelength, the concentration of the second analyte of interest in the targeted region of interest. The first analyte of interest may include at least one of: nitrous oxide, sulfur oxide, CMAS, smoke, or ash. The second analyte of interest may include water vapor. The targeted region of interest may be provided at a distance between 1 and 1,000 meters from the aircraft. The targeted region of interest may have a depth of 1,000 meters or less. The method may include training one or more artificial intelligence/machine learning models at least in part on the determined concentration of the first analyte of interest in the targeted region of interest.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A-1G illustrate examples of multi-wave differential absorption LIDAR systems for obtaining near-to-mid distance atmospheric gas and particulate data according to this disclosure; and
FIGURE 2 illustrates operations of an example method for using multi-wave differential absorption LIDAR to measure concentrations of a analyte of interest in a targeted region of interest according to this disclosure.

### DETAILED DESCRIPTION

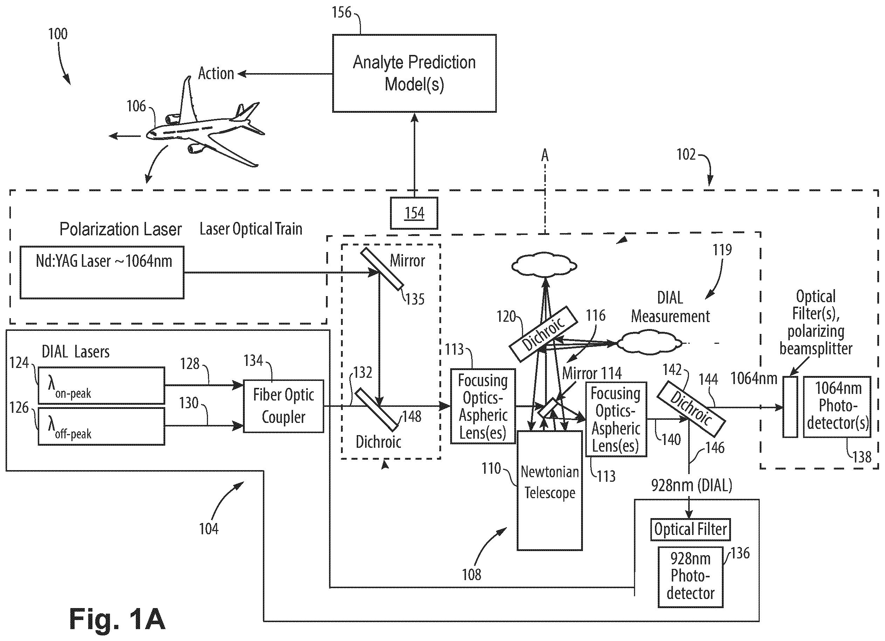

FIGURES 1A through 2, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, recent developments in the art have increased the need for (such as to avoid contrail formation, contrail persistence, or ingestion of CMAS and volcanic ash by engines), as well as opportunities for utilizing (for example, through training Al/ML models to predict areas where contrails are likely to form and persist, or contaminants are likely to accumulate) granular atmospheric gas and particulate data.

FIGURES 1A-1G illustrate examples of multi-wave differential absorption LIDAR systems for obtaining near-to-mid distance (for example, from 0 to 5 kilometers away from the system) atmospheric gas and particulate data according to this disclosure. For convenience of cross-reference, elements common to more than one of FIGS. 1A-1G are numbered similarly.

As shown in FIGS. 1A-1G, system 100 can include a combination of differential absorption LIDAR ("DIAL") components and optical systems, such as those disclosed in U.S.

Patent No. 10,816,661. A DIAL sub-system 104 is optically coupled to the illumination and light collection optics 108.

Ground-based DIAL systems and techniques for detecting atmospheric water vapor (sometimes referred to as "WV-DIAL") are disclosed in U.S. Patent No. 10,605,900. DIAL sub-system 104 can operate according to the same underlying technical principles as the aforementioned WV-DIAL system, wherein, to detect the concentration of an analyte of interest, two or more pulsed lasers are projected (in this case, through light collection optics 108) towards one or more atmospheric regions of interest (for example, at points directly ahead of an airplane's flight path, or above and below). A first laser of the two or more lasers projects light at a wavelength corresponding to an absorption peak in the absorption spectrum of the analyte of interest (for example, 829 nm for water). A second laser of the two or more lasers projects light, at the same power, but at a wavelength corresponding to a base of the absorption curve near the wavelength of the peak (for example, 828.7 nm for water). Additional lasers can be used, projecting light at frequencies between the absorption peak with the first laser and the base of absorption curve with the second laser. The use of third or more lasers can provide several technical benefits. Projecting light at a third wavelength can extend the dynamic range and increase measurement accuracy. Further, and of significant practical value in real-world applications, measuring absorption and backscatter at a third wavelength can confirm the absence of contaminants with absorption spectra similar to those of analytes of interest. Additionally, testing at a third wavelength allows for a measurement of the broadening of the absorption curve between the peak and trough measured the first and second wavelengths. As the broadening of the curve absorption curve is a function of gas pressure, interrogating the region of interest with light at a third wavelength can be used to measure pressure at a distance. The presence of analytes of interest cause a first fraction of the light projected by the first and second lasers to be absorbed by the analytes of interest, and a second fraction of the light projected by the first and second lasers to be backscattered via Rayleigh and Mie scattering. Because the analyte of interest more readily absorbs light of the first wavelength than light of the second wavelength, provided the analyte of interest is present in the sampled region of interest, the measured backscatter signal at the first wavelength will necessarily be weaker (such as of less amplitude) than the measured backscatter signal at the second wavelength. From the difference in the measured backscatter signals at the first and second wavelengths, it is possible to measure the concentration (such as the mass of the analyte of interest for a given mass of dry air in a given volume) of the analyte of interest.

According to certain embodiments, a polarization measurement sub-system 102 and the DIAL sub-system 104 share at least a portion of an optical path through the illumination and light collection optics 108. This integration makes it practical for the sub-system 102, the DIAL sub-system 104, and the illumination and light collection optics 108 to occupy a sufficiently small form factor and weight for service aboard an aircraft 106.

The illumination and light collection optics 108 are configured for illuminating a targeted region of interest by projecting pulses of laser light at multiple wavelengths from DIAL sub-system 104 to points at mid-to-near field distances (for example, from 0 to 5 kilometers away) from aircraft 106, at the targeted region of interest, and for receiving light from the targeted region of interest. Illumination and light collection optics 108 can include one or more focusing structures, such as a Newtonian telescope 110 with a mirror 114. Additionally, or alternatively, the focusing structures can include a parabolic mirror 112 or any other suitable optical elements for illuminating a scene and collecting a return of the illumination from the scene. For example, those skilled in the art will readily appreciate how to adapt a Cassegrain telescope for use with the system 100 in lieu of a Newtonian telescope or parabolic mirror. In utilizing a parabolic mirror 112 for the light collection optics, the illumination and light collection optics 108 are coupled to the parabolic mirror via a fiber bundle. Parabolic mirror 112 can be used with a through hole along the optical axis to allow light from the illumination sources to pass through.

As shown in the figures, focusing optics/aspheric lens(es) 113 can be included on the illumination path entering the illumination and light collection optics 108, and on the return path entering the sensor portions of the polarization measurement sub-system 102 and the DIAL sub-system 104. The polarization measurement sub-system 102 and the DIAL sub-system 104 share at least a returning portion 116 of the optical path between the targeted region of interest and the illumination and light collection optics 108. The returning portion 116 brings returns from a field of view (FOV) 118 containing the targeted region of interest, which remote from the aircraft. A dichroic filter 120 can be included on a scene-side of the illumination and light collection optics 108 to allow the polarization measurement sub-system 102 and the DIAL sub-system 104 to interrogate multiple fields of view (FOV), such as through two different windows onboard the aircraft aligned along two different optical axes A and B, such as one FOV 118 forward facing horizonal from the aircraft 106, and a second FOV 119 and downward or upward from the aircraft, such as where the second FOV 119 is surveyed with its own window separate from the window for FOV 118. Additionally, or alternatively, DIAL sub-system 104 can be configured such that optical axes A and B can be repositioned during operation, so that the DIAL sub-system 104 scans multiple targeted regions of interest. Depending on embodiments, the repositioning of the targeted region of interest can be a change of interrogation angle or of depth of interrogation (for example, "painting" a solid angle of view across multiple scanning depths). Additionally, the range of interrogation angle over which DIAL sub-system 104 scans can be 180 degrees along the x, y and z axes, such that the system can obtain data above, below, in front of and behind the aircraft. For certain applications (for example, searching for drier air that is less conducive to contrail formation), obtaining atmospheric gas and particulate data across a visual field that is coextensive with alternative flightpaths (for example, scanning the air in directions aircraft 106 could alter its flight path towards) can be necessary.

In certain embodiments, polarization measurement sub-system 102 and DIAL sub-system 104 can be aligned through a single window to interrogate the same field of view or substantially the same field of view by eliminating the dichroic filter 120. In these configurations, the polarization measurement sub-system 102 and the DIAL sub-system 104 are aligned along a single optical axis A, such as through a single window of the aircraft 106 with respect to the field of view 118 of the parabolic mirror 114.

The DIAL sub-system 104 includes a first illuminator 124 configured to emit illumination in absorption band(s) for one or more analytes of interest (for example, water vapor, ash, CMAS, nitrous oxide (NOx), or sulfur oxide (SOx)) and a second illuminator 126 configured to emit illumination in non-absorption band(s) in absorption trough(s) for the one or more analytes of interest, wherein the absorption trough(s) are adjacent to the absorption band(s).

Depending on configuration, first illuminator 124 and/or second illuminator 126 can be a tunable laser, which can project a beam at a plurality of wavelengths. Additionally, or alternatively, first illuminator 124 can comprise a plurality of lasers, wherein each laser of the plurality of lasers emits at a wavelength corresponding to an absorption peak of a analyte of interest. Thus, depending on embodiments, system 100 can comprise third, fourth, fifth or more illuminators, wherein each of the illuminators emits at a single wavelength. Similarly, in some embodiments According to some embodiments, to make system 100 "eye safe," absorption bands for analytes of interest can be selected wavelengths in the near IR band ranging from 780 to 8000 nm, thereby falling outside of the range of wavelengths for which accidental exposure could damage a human eye. In certain embodiments, non-absorption band can also in the IR band ranging from 780 to 8000 nm. The laser light (from first illuminator 124 and/or second illuminator 126) can be circularly polarized and detected to discriminate ice crystals from water droplets and may use a separate receiving optical train and detectors. For example, where water vapor is the analyte of interest, light can be emitted by first illuminator at an absorption band of 829.022 nm and light can be emitted by the second emitter a non-absorption band can be centered at 828.725 nm. Illumination paths 128, 130 of the first and second illuminators 124, 126 can be conjoined along an illuminator path 132 passing into the illumination and light collection optics 108, with, for example, a fiber optic coupler 134.

The DIAL sub-system 104 includes a first photodetector 136 configured to detect an intensity of returned illumination from the FOV 118 or 119 in the one or more absorption band(s) of the analyte(s) of interest and configured to detect an intensity of returned illumination (from the FOV 118 or 119) in the non-absorption band(s) of the one or more analyte(s) of interest. The photodetector 136 shares a portion 140 of an optical path returning from the illumination and light collection optics 108 with the polarization measurement sub-system 102. A main dichroic filter 142 diverts return illumination to the polarization measurement sub-system 102 on a first return path 144 and to the first and second photodetectors 136 and 138 along a second return paths 146, separately to each of first and second photodetectors 136 and 138. Second photodetector 138 receives return illumination for the polarization measurement sub-system 102, and first photodetectors 136 receives the backscattered light for the DIAL sub-system 104. According to certain embodiments, second photodetector 138 includes one or more of a polarizing filter or a polarizing beam splitter to isolate the portion of the backscatter whose polarization is reflective of a concentration of a analyte of interest. The mirror 135 and dichroic filter 148 in the laser optical train can, as shown in the figures, be replaced with suitable fiber optic coupler 134.

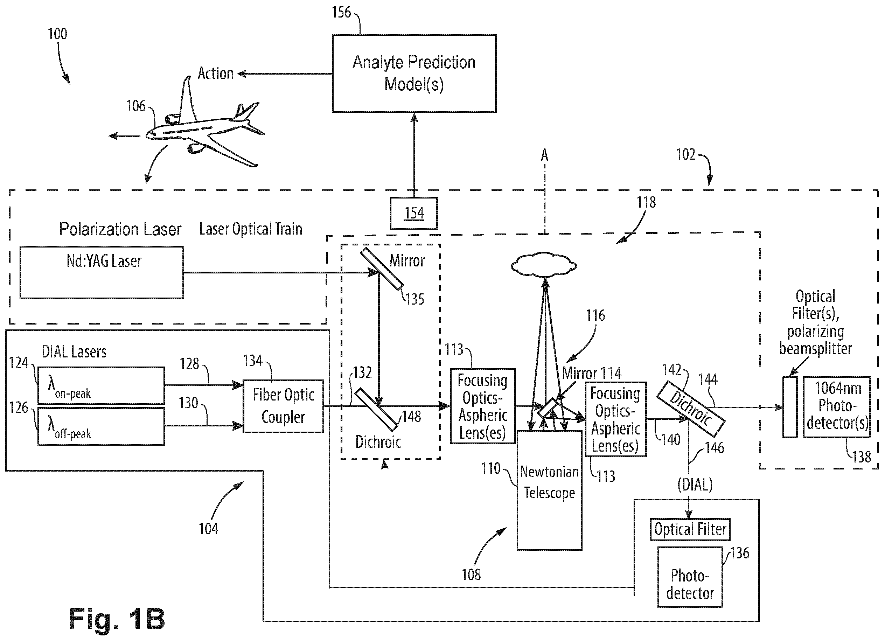

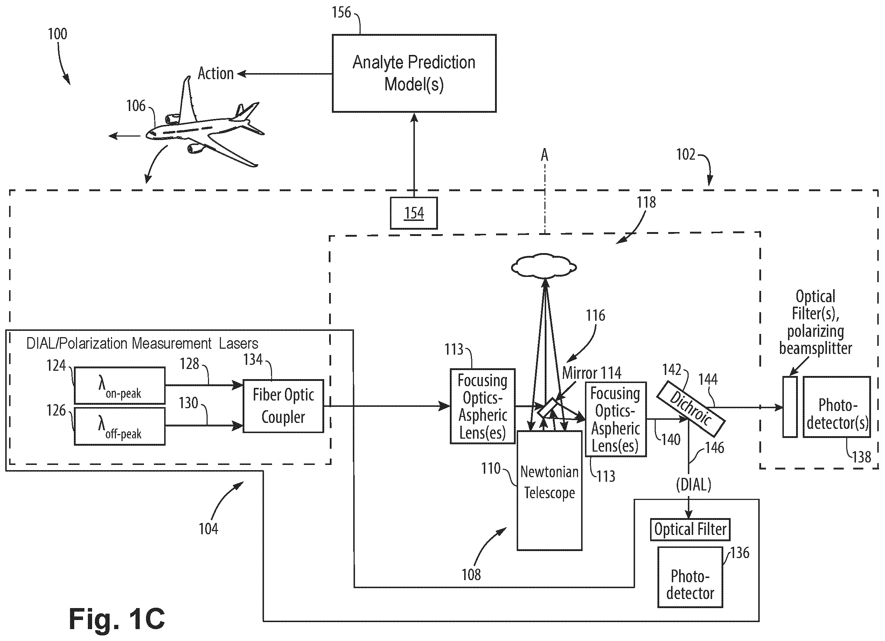

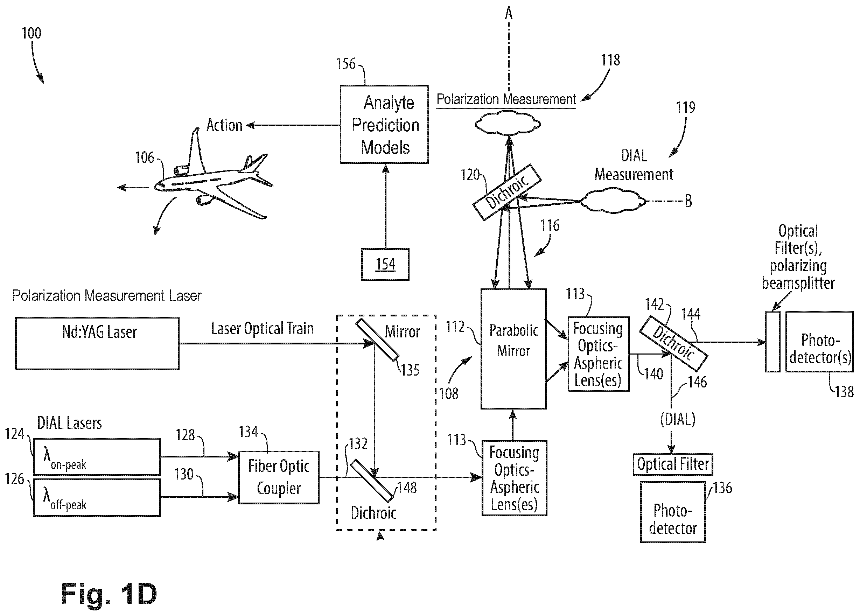

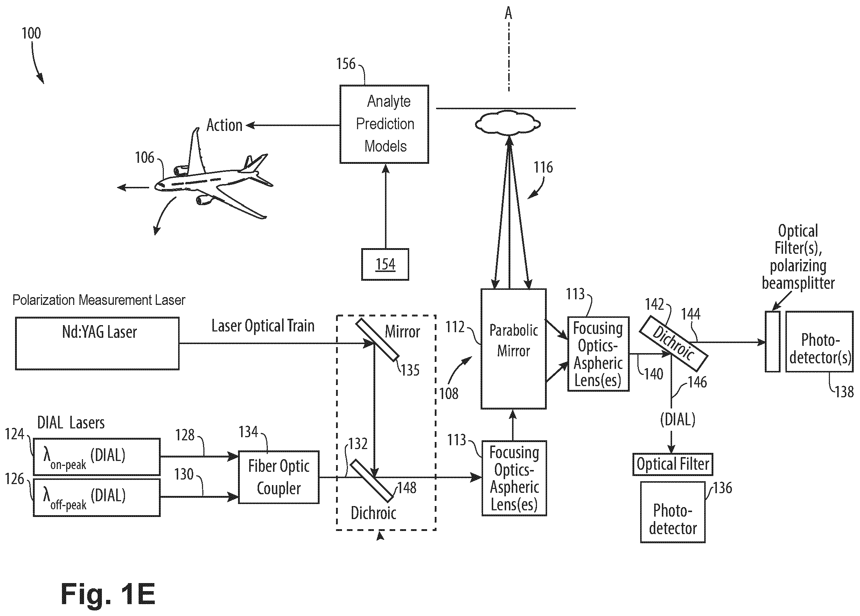

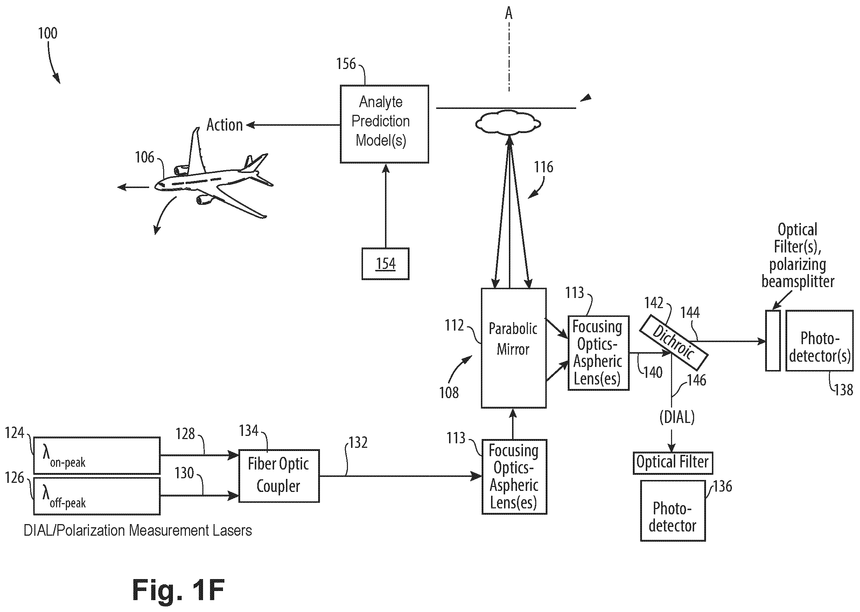

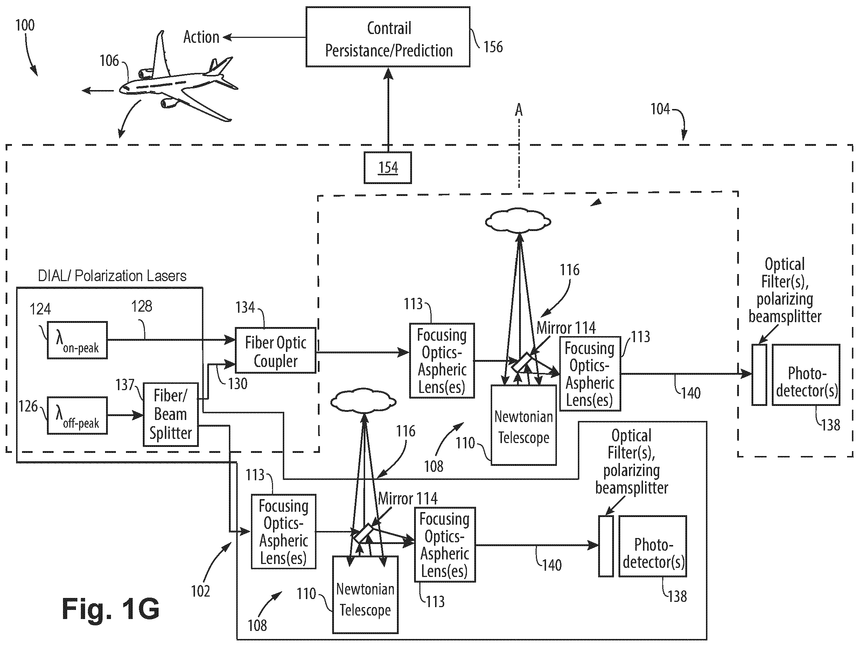

The examples shown in FIGS. 1A-G are illustrative and should not be construed as limitative of embodiments according to this disclosure. The underlying architecture of system 100, comprising a multi-wavelength DIAL system, focusing structures, and a polarization measurement sub-system, can be realized through a wide variety of component configurations. FIGURES 1A-1G should be interpreted as emphasizing the possibilities and flexibility of component combinations according to this disclosure, rather than limiting same. For example, in FIG. 1G a fiber/beam splitter 137 is used to allow the polarization measurement sub-system 102 to utilize one of the first illuminator 124 of the DIAL sub-system 104, through a separate set of optics 108b from the optics 108a of the DIAL sub-system 104. FIG. 1B illustrates how dichroic filter 120, can, in some embodiments, be omitted. FIG. 1C illustrates how, the illuminators (for example, lasers) for the polarization measurement sub-system 102 and DIAL sub-system 104 can be shared. FIG. 1D illustrates how a parabolic mirror 112 can be used rather than a Newtonian telescope 110 as part of illumination and light collection optics 108. FIG. 1E illustrates an example utilizing a parabolic mirror 112 similar to that in FIG. 1D, but without the dichroic filter 120. FIGS. 1E and 1F illustrate examples in which a parabolic mirror 112 is used instead of Newtonian telescope 110 of FIG. 1B.

With reference again to FIG. 1A, regardless of whether the system 100 is configured according to the examples shown in FIGS. 1A-1G, a controller 154 is operatively connected to the first photodetector 136, from which absorption differentials are obtained from the backscattered light from first illuminator 124 and second illuminator 126. The controller 154 can also be operatively connected to the polarization measurement sub-system 102 to analyze the returned light for polarization values associated with analytes of interest (for example, ice and some species of solid analytes). The controller 154 is connected to and can provide an output to analyte prediction model 156. The analyte prediction model 156 can be one or more artificial intelligence/machine learning models trained to predict the presence of analytes of interest based on absorption differentials and polarization data generated by controller 154, and/or predict the incidence of atmospheric conditions of interest (for example, contrail formation and persistence) associated with the presence of one or more analytes of interest. The difference in the attenuation returns signals at photodetectors 136 and 138 can be directly correlated to the concentration of the analyte of interest.

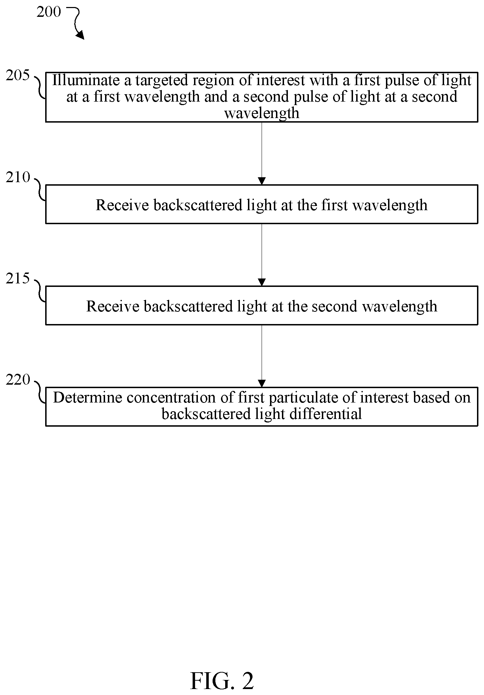

FIGURE 2 illustrates operations of an example method 200 for using multi-wave differential absorption LIDAR to measure concentrations of a analyte of interest in a targeted region of interest according to this disclosure. The operations described with reference to FIG. 2 can be performed in any suitably configured system, including the example variations of system 100 described with reference to FIGS. 1A-1G of this disclosure.

Referring to the illustrative example of FIG. 2, at operation 205, a system comprising, at a minimum, illumination and light collection optics (for example, illumination and light collection optics 108 in FIG. 1A), a first illuminator, a second illuminator, a photodetector and a controller, illuminates a targeted region of interest with a first pulse of light at a first wavelength and a second pulse of light at a second wavelength. The first pulse of light can be generated by the illuminator and projected to the targeted region of interest (for example, a section of atmosphere of analytical interest, such as a volume of air an aircraft is, or could, fly through) via the illumination and light collection optics. The first wavelength can correspond to an absorption peak of in an absorption curve of a first analyte of interest (for example, ice, water vapor, CMAS, ash, NOx, or SOx). The second wavelength can correspond to an absorption trough in the absorption curve of the first analyte of interest, wherein the second wavelength is adjacent to the absorption peak of the absorption curve. As used in this disclosure, the expression "adjacent to" when used to describe the separation between wavelengths in an absorption curve encompasses ½ of the width of the absorption curve. Thus, where water vapor is the analyte of interest, the absorption peak at 829 nm and the lower trough at 828.7 nm would be "adjacent."

At operation 210, backscattered light, due to Rayleigh or Mie scattering of the first wavelength is received by the photodetector, which measures an intensity of the backscattered light at the first wavelength. Because the first wavelength corresponds to the absorption peak of the first analyte of interest, in addition to geometric losses (such as only a small fraction of the first light pulse scatters back in the direction of the illumination and light collection optics), a further fraction of the first light pulse is absorbed by the analyte of interest.

At operation 215, backscattered light at the second wavelength is received by the photodetector, which likewise measures an intensity of the backscattered light at the second wavelength. While the geometric losses due to Rayleigh or Mie scattering of the second light pulse should be identical, or nearly identical to those of the first light pulse, because the second wavelength corresponds to the absorption trough adjacent to the absorption peak at the first wavelength, comparatively little of the light at the second wavelength is absorbed. Thus, assuming the presence of the analyte of interest in the targeted zone of interest, the measured intensity of the backscattered light at the second wavelength is greater than that of the backscattered light at the first wavelength. At operation 220, a concentration of the first analyte of interest in the targeted region of interest can be determined by the controller.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A system (100) comprising:
illumination and light collection optics (108) configured to illuminate a targeted region of interest and receive backscattered light from the targeted region of interest;
a differential absorption light detection and ranging ("DIAL") sub-system (104), the DIAL sub-system (104) comprising:
a first illuminator (124) configured to emit light through the illumination and light collection optics (108) at a first wavelength corresponding to a first absorption peak in an absorption curve of a first analyte of interest, wherein, optionally, the first analyte of interest is water;
a second illuminator (126) configured to emit light through the illumination and light collection optics (108) at a second wavelength corresponding to a first absorption trough in the absorption curve of the first analyte of interest, wherein the second wavelength is adjacent to the first wavelength; and
a first photodetector (136) configured to measure an intensity of backscattered light at the first wavelength and an intensity of backscattered light at the second wavelength; and
a controller (154) configured to determine, based on a differential between the intensity of the backscattered light at the first wavelength and the intensity of the backscattered light at the second wavelength, a concentration of the first analyte of interest in the targeted region of interest.

2. The system (100) of Claim 1, wherein:
the system (100) is integrated with an aircraft (106); and
the illumination and light collection optics (108) are configured to periodically change one or more of a range from the aircraft (106) of the targeted region of interest or an angle relative to a direction of flight of the aircraft (106) of the targeted region of interest to scan for the first analyte of interest and, optionally, the targeted region of interest is provided at a distance between 0 and 5 kilometers from the aircraft (106).

3. The system (100) of Claim 1 or 2, wherein:
the DIAL sub-system (104) further comprises a third illuminator configured to emit light through the illumination and light collection optics (108) at a third wavelength corresponding to a wavelength between the first and second wavelengths, wherein the third wavelength is in the absorption curve of the first analyte of interest between the first absorption peak and the first absorption trough; and
the controller (154) is configured to determine, based on a differential between an intensity of the backscattered light at the third wavelength relative to one or more of the intensity of the backscattered light at the first wavelength or the backscattered light at the second wavelength, the concentration of the first analyte in the targeted region of interest.

4. The system (100) of Claim 1 or 2, wherein the DIAL sub-system (104) further comprises:
a third illuminator configured to emit light through the illumination and light collection optics (108) at a third wavelength corresponding to a second absorption peak in an absorption curve of a second analyte of interest; and
a fourth illuminator configured to emit light through the illumination and light collection optics (108) at a fourth wavelength corresponding to a second absorption trough in the absorption curve of the second analyte of interest, wherein the fourth wavelength is adjacent to the third wavelength; and
wherein the controller (154) is configured to determine, based on a differential between an intensity of backscattered light at the third wavelength and an intensity of backscattered light of the fourth wavelength, a concentration of the second analyte of interest in the targeted region of interest,
optionally wherein the second analyte of interest comprises at least one of: a turbine exhaust emission, nitrous oxides, sulfur oxides, calcium-magnesium-alumina-silicate (CMAS), methane, sand, dust smoke, or ash.

5. The system (100) of Claim 4, further comprising:
a polarization measurement sub-system (102) comprising:
a fifth illuminator configured to emit polarized light through the illumination and light collection optics (108) at a fifth wavelength distinct from the first, second, third, and fourth wavelengths;
a polarizing filter; and
a second photodetector (138) configured to measure an intensity of backscattered light passing through the polarizing filter at the fifth wavelength;
wherein the controller (154) is configured to determine, based on the intensity of the backscattered light passing through the polarizing filter at the fifth wavelength, the concentration of the second analyte of interest in the targeted region of interest.

6. The system (100) of any preceding claim, wherein the targeted region of interest has a depth of 1 kilometer or less, and/or the system (100) further comprises one or more machine learning/artificial intelligence models trained at least in part on the determined concentration of the first analyte of interest in the targeted region of interest.

7. A method comprising:
illuminating a targeted region of interest by (i) emitting, using a first illuminator (124), light through illumination and light collection optics (108) at a first wavelength corresponding to a first absorption peak in an absorption curve of a first analyte of interest and (ii) emitting, using a second illuminator (126), light through the illumination and light collection optics (108) at a second wavelength corresponding to a first absorption trough in the absorption curve of the first analyte of interest, wherein the second wavelength is adjacent to the first wavelength;
receiving backscattered light from the targeted region of interest;
measuring, using a first photodetector (136), an intensity of backscattered light at the first wavelength and an intensity of backscattered light at the second wavelength; and
determining, based on a differential between the intensity of the backscattered light at the first wavelength and the intensity of the backscattered light at the second wavelength, a concentration of the first analyte of interest in the targeted region of interest.

8. The method of Claim 7, wherein:
the method is performed in association with an aircraft (106); and
the method further comprises periodically changing one or more of a range from the aircraft (106) of the targeted region of interest or an angle relative to a direction of flight of the aircraft (106) of the targeted region of interest to scan for the concentration of the first analyte of interest and, optionally, the targeted region of interest is provided at a distance between 1 and 1,000 meters from the aircraft (106).

9. The method of Claim 7 or 8, wherein:
illuminating the targeted region of interest further comprises emitting, using a third illuminator, light through the illumination and light collection optics (108) at a third wavelength corresponding to a wavelength between the first and second wavelengths, wherein the third wavelength is in the absorption curve of the first analyte of interest between the first absorption peak and the first absorption trough; and
the method further comprises:
receiving, at the first photodetector (136) via the illumination and light collection optics (108), backscattered light at the third wavelength; and
determining, based on a differential between an intensity of the backscattered light at the third wavelength relative to one or more of the intensity of the backscattered light at the first wavelength or the backscattered light at the second wavelength, the concentration of the first analyte in the targeted region of interest.

10. The method of Claim 7 or 8, wherein:
illuminating the targeted region of interest further comprises (i) emitting, using a third illuminator, light through the illumination and light collection optics (108) at a third wavelength corresponding to a second absorption peak in an absorption curve of a second analyte of interest and (ii) emitting, using a fourth illuminator, light through the illumination and light collection optics (108) at a fourth wavelength corresponding to a second absorption trough in the absorption curve of the second analyte of interest, wherein the fourth wavelength is adjacent to the third wavelength; and
the method further comprises:
receiving, at the first photodetector (136) via the illumination and light collection optics (108), backscattered light at the third wavelength and backscattered light at the fourth wavelength; and
determining, based on a differential between an intensity of the backscattered light at the third wavelength and an intensity of the backscattered light of the fourth wavelength, a concentration of the second analyte of interest in the targeted region of interest.

11. The method of Claim 10, wherein:
illuminating the targeted region of interest further comprises emitting, using a fifth illuminator, polarized light through the illumination and light collection optics (108) at a fifth wavelength distinct from the first, second, third, and fourth wavelengths; and
the method further comprises:
receiving, at a second photodetector (138) through a polarizing filter, backscattered light at the fifth wavelength;
using the second photodetector (138), measuring an intensity of the backscattered light at the fifth wavelength; and
determining, based on the intensity of the backscattered light passing through the polarizing filter at the fifth wavelength, the concentration of the second analyte of interest in the targeted region of interest.

12. The method of claim 10 or 11, wherein the first analyte of interest is water.

13. The method of Claim 12, wherein the second analyte of interest comprises at least one of: nitrous oxide, sulfur oxide, calcium-magnesium-alumina-silicate (CMAS), smoke, or ash.

14. The method of any of claims 7 to 13, wherein the targeted region of interest has a depth of 1,000 meters or less.

15. The method of any of claims 7 to 14, further comprising:
training one or more artificial intelligence/machine learning models at least in part on the determined concentration of the first analyte of interest in the targeted region of interest.
